# EUROPEAN PATENT APPLICATION

(11) **EP 2 134 076 A2**
(43) Date of publication of application: **16.12.2009**
(21) Application number: 09162332.2
(22) Date of filing: 09.06.2009
(51) Int. Cl.: H04N 5/217

(54) **Defective pixel processing device and defective pixel processing method**

(30) Priority: 11.06.2008 JP 2008152808
(71) Applicant: NEC Electronics Corporation, Kawasaki, Kanagawa 211-8668 (JP)
(72) Inventor: Katou, Yusuke, Kawasaki Kanagawa 211-8668 (JP)
(74) Representative: Betten & Resch

(57) **Abstract**

In order to determine a defective pixel speedily and accurately, a defective pixel processing device includes: first determination means that determines whether or not each of pixels outputted from an imaging device is a defective pixel candidate by comparing pixel data of the pixel with a threshold value; and second determination means that determines whether or not the defective pixel candidate determined by the first determination means is a defective pixel by comparing the pixel data of the defective pixel candidate with the pixel data of the pixels around the defective pixel candidate.

## Description

### BACKGROUND OF THE INVENTION

### 1. Field of the Invention

The present invention relates to a defective pixel processing device and a defective pixel processing method, and more specifically relates to a defective pixel processing device and a defective pixel processing method in which: on the basis of pixel data of each pixel outputted from an imaging device, whether or not each pixel is a defective pixel candidate is determined, and whether or not the determined defective pixel candidate is a defective pixel is further determined.

### 2. Description of the Prior Art

Conventionally, a defective pixel detecting method has been known in which: pieces of pixel data outputted from neighboring pixels located around a predetermined pixel are extracted; a maximum value, a mean value, and a minimum value of the pieces of pixel data are calculated; then a comparison is performed to find out which of these values the value of each piece of the pixel data is closest to; and whether or not the predetermined pixel is a defective pixel is determined (for example, see Japanese Patent Application Publication No. 2006-229626).

However, the conventional pixel data detecting method requires much processing time since the foregoing comparison processing needs to be performed on the neighboring pixels of all of the predetermined pixels. Instead of this detection method, another method may be employed in which a defective pixel is determined by simply comparing all of the predetermined pixels with a threshold value. In this case, however, another problem arises that a normal pixel may be erroneously detected as a defective pixel when the threshold value is set strict, whereas, a defective pixel can fail to be detected when the threshold value is set loose. Thus, the detection accuracy may decrease.

### SUMMARY

One aspect of the present Invention provides a defective pixel processing device including: first determination means that compares pixel data of each of pixels outputted from an imaging device with a threshold value so as to determine whether or not each of the pixels is a defective pixel candidate; and second determination means that compares the pixel data of the defective pixel candidate determined by the first determination means with the pixel data of the pixels around the defective pixel candidate so as to determine whether or not the defective pixel candidate is a defective pixel. According to this one aspect, the first determination means, which is capable of performing determination processing speedily, determines the defective pixel candidate, and then the second determination means, which is capable of performing determination processing accurately, determines the defective pixel from the narrowed down defective pixel candidates. Accordingly, the defective pixel can be determined speedily and accurately.

Another aspect of the present invention may be a defective pixel processing method including: a first determination step of comparing pixel data of each of pixels outputted from an imaging device with a threshold value so as to determine whether or not each of the pixels is a defective pixel candidate; and a second determination step of comparing the pixel data of the defective pixel candidate determined in the first determination step with the pixel data of the pixels around the defective pixel candidate so as to determine whether or not the defective pixel candidate is a defective pixel.

According to the present invention, the defective pixel can be determined speedily and accurately.

### BRIEF DESCRIPTION OF THE DRAWINGS

FIG. 1 is a block diagram schematically showing a system configuration of a camera apparatus embedded with a defective pixel processing device according to one embodiment of the present invention.
FIG. 2 is a view showing positions of pixels of the same color above and below a defective pixel candidate.
FIG. 3 is a view schematically showing a processing content for one pixel of an imaging device.
FIG. 4 is a view showing one example of a processing content for all pixels of the imaging device.
FIG. 5 is a flowchart showing one example of a processing flow of the defective pixel processing device according to one embodiment of the present invention.
FIG. 6 is a flowchart showing one example of a processing flow of the defective pixel processing device according to one embodiment of the present invention.

### DETAILED DESCRIPTION OF THE PREFERRED EMBODIMENTS

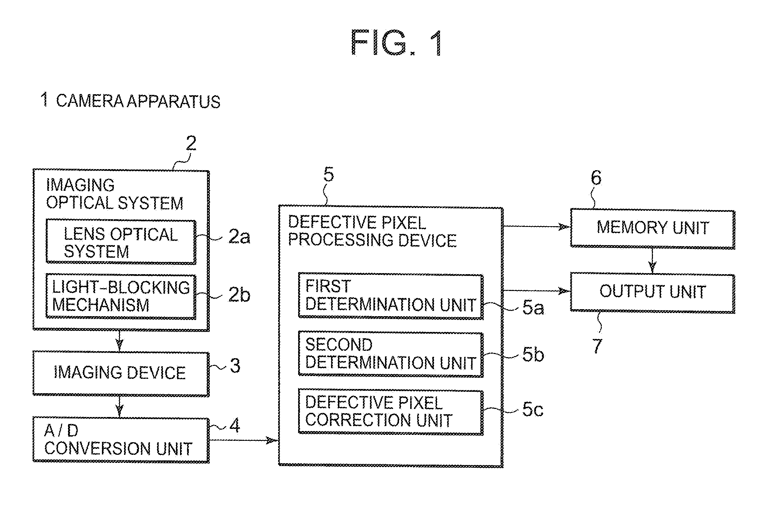

Hereinafter, one embodiment will be described as a preferred embodiment for carrying out the present invention with reference to the accompanying drawings. FIG. 1 is a block diagram schematically showing a system configuration of a camera apparatus embedded with a defective pixel processing device according to one embodiment of the present invention.

A camera apparatus 1 according to this embodiment includes an imaging opticalsystem2, an imaging device 3, an A/D conversion unit 4, a defective pixel processing device 5, a memory unit 6, and an output unit 7, and is capable of imaging a subject such as a material object.

The imaging optical system 2 mainly includes a lens optical system 2a configured of lenses and a light-blocking mechanism 2b, such as an aperture or a shutter, arranged in front of the lens optical system 2a to block light from a subject.

As the imaging device 3, a charge coupled device (CCD) or a complementary metal oxide semiconductor (CMOS) device is used, for example. The imaging device 3 is configured of pixels A1 to An. Incident light from a subject which has passed through the light-blocking mechanism 2b and the lens optical system 2a of the imaging optical system 2 forms an image on pixels An of the imaging device 3. Each pixel An of the imaging device 3 performs photoelectric conversion on the incident light and outputs pixel data (for example, brightness value) Dn to the A/D conversion unit 4.

The A/D conversion unit 4 converts the analog pixel data Dn outputted from each pixel An of the imaging device 3 to digital pixel data Dn, and outputs the digital pixel data Dn to the defective pixel processing device 5.

The defective pixel processing device 5 includes a first determination unit 5a, a second determination unit 5b, and a defective pixel correction unit 5c.

The first determination unit 5a compares the pixels data Dn of all pixels An of the imaging device 3 outputted from the A/D conversion unit 4 with a threshold value Th, and then determines whether or not each pixel An is a defective pixel candidate Am (first determination step P1).

For example, when the pixel date Dn of each pixel An of the imaging device 3 outputted from the A/D conversion unit 4 is a first threshold value Th1 or greater (Dn ≥ Th1), the first determination unit 5a determines that the defective pixel candidate Am may be a white defect. When the pixel data Dn of each pixel An of the imaging device 3 outputted from the A/D conversion unit 4 is a second threshold value Th2 or less (Dn ≤ Th2), the first determination unit 5a determines that the defective pixel candidate Am may be a black defect. Note that a determination method employed by the first determination unit 5a is not limited to the example described above, and a known determination method may be employed.

As the first threshold value Th1, a value at which the pixel data may be a white defect is obtained by experiment in advance and is stored in the memory unit 6. In a similar manner, as the second threshold value Th2, a value at which the pixel data may be a black defect is obtained by experiment in advance and is stored in the memory unit 6.

Here, the white defect refers to a defective pixel that appears as a white dot of high brightness when a bypass voltage that is always constant is added to an imaging output in accordance with an incident light for example. On the other hand, the black defect refers to a defective pixel that appears as a black dot of low brightness due to low photoelectric sensitivity, for example. The first determination unit 5a outputs the determined defective pixel candidate Am to the second determination unit 5b.

The second determination unit 5b compares pixel data Dm of the defective pixel candidates Am outputted from the first determination unit 5a with pixel data Dmn of pixels Amn around the defective pixel candidates Am, and then determines whether or not the defective pixel candidate Am is a defective pixel Ak (second determination step P2).

For example, when a difference δ between a mean value of the pixel data Dmn of the pixels Amn around the defective pixel candidate Am and the pixel data Dm of the defective pixel candidate Am is a third threshold value Th3 or greater, the second determination unit 5b determines that the defective pixel Ak is a white defect. On the other hand, when the difference δ between the mean value of the pixel data Dmn of the pixels Amn around the defective pixel candidate Am and the pixel data Dm of the defective pixel candidate Am is a fourth threshold value Th4 or less, the second determination unit 5b determines that the defective pixel Ak is a black defect.

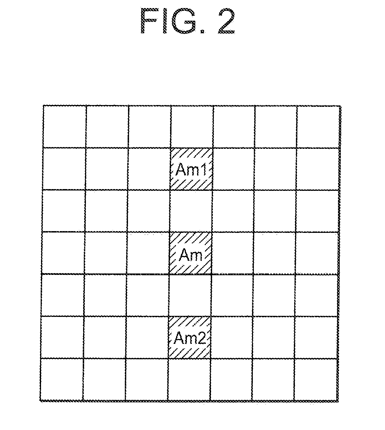

More specifically, the second determination unit 5b firstly extracts a pair of pixels Am1 and Am2 that are located above and below the defective pixel candidate Am and that have approximately the same color as the defective pixel candidate Am, and calculates the mean value ((Dm1 + Dm2) /2) of pixel data Dm1 and Dm2 of the extracted pixels Am1 and Am2. Then, when the difference δ between the calculated mean value and the pixel data Dm of the defective pixel candidate Am is the third threshold value Th3 or greater ((Dm1 + Dm2)/2 - Dm ≥ Th3), the second determination unit 5b determines that the defective pixel Ak is a white defect (see FIG. 2) .

In a similar manner, the second determination unit 5b firstly extracts the pair of pixels Am1 and Am2 that are located above and below the defective pixel candidate Am and that have approximately the same color as the defective pixel candidate Am. Then, the second determination unit 5b calculates the mean value of the pixel data Dm1 and Dm2 of the extracted pixels Am1 and Am2. Thereafter, when the difference δ between the calculated mean value and the pixel data Dm of the defective pixel candidate Am is the fourth threshold value Th4 or less ((Dm1 + Dm2) /2 - Dm ≤ Th4), the second determination unit 5b determines that the defective pixel Ak is a black defect. The second determination unit 5b outputs the determined defective pixel Ak to the defective pixel correction unit 5c. Note that a determination method employed by the second determination unit 5b is not limited to the example described above, and a known determination method may be employed as long as a highly accurate determination is possible.

For example, the second determination unit 5b firstly extracts the pair of pixels Am1 and Am2 that are located above and below the defective pixel candidate Am and that have approximately the same color as the defective pixel candidate Am. Then, the second determination unit 5b calculates the mean value of the pixel data Dm1 and Dm2 of the extracted pixels Am1 and Am2. However, instead of this, a mean value of pixel data Dn of the pixels An located to the left and right of or diagonally above and below the defective pixel candidate Am may be calculated. Further, the second determination unit 5b may firstly estimate a normal pixel based on a background pattern of an image, and then calculate a mean value of pixel data of the pixels around the defective pixel candidate Am among the estimated normal pixels.

The defective pixel correction unit 5c performs correction of pixel data Dk of the defective pixel Ak determined by the second determination unit 5b (defective pixel correction step P3). For example, the defective pixel correction unit 5c substitutes the pixel data Dk of the defective pixel Ak with a mean value ((Dk1 + Dk2)/2 of pixel data Dk1 and Dk2 of a pair of pixels Ak1 and Ak2 that are located above and below the defective pixel Ak outputted from the second determination unit 5b and that have approximately the same color as the defective pixel Ak.

Note that a correction method of the defective pixel taken by the defective pixel correction unit 5c is not limited to the example described above, and a known correction method that enables high processing speed and processing accuracy may be employed. As described above, the defective pixel correction unit 5c corrects the pixel data Dk of all of the defective pixels Ak, and outputs the pixel data Dk to the memory unit 6 and the output unit 7.

As a main hardware configuration, the defective pixel processing device 5 includes a central processing unit (CPU) that performs arithmetic processing or the like, a read only memory (ROM) that stores an arithmetic program or the like executed by the CPU, and a random access memory (RAM) that temporarily stores processing data or the like. The first determination unit 5a, the second determination unit 5b, and the defective pixel correction unit 5c are, for example, stored in the ROM and realized by the program executed by the CPU.

Further, the defective pixel processing device 5 includes a known image processing function other than the functions described above. For example, the defective pixel processing device 5 performs image processing compliant with a picture signal specification such as color separation, white balance, and gamma correction as well as D/A conversion processing on the pixel data Dn outputted from all of the pixels An of the imaging device 3 via the A/D conversion unit 4. Then, the defective pixel processing device 5 converts the resultant pixel data Dn to a video signal of an appropriate format, and outputs the video signal to the output unit 7.

The memory unit 6 sequentially stores the pixel data Dn of all of the pixels An including the pixel data Dk of the defective pixel Ak corrected by the defective pixel correction unit 5c. The memory unit 6 is configured of, for example, a nonvolatile memory, i.e., an EEPROM, a backup RAM, or the like.

The output unit 7 outputs, as a taken image, the pixel data Dn of all of the pixels An including the pixel data Dk of the defective pixel Ak corrected by the defective pixel correction unit 5c. The output unit 7 is configured of an arbitrary display device, e.g., a liquid crystal display device, an organic EL display device, or the like.

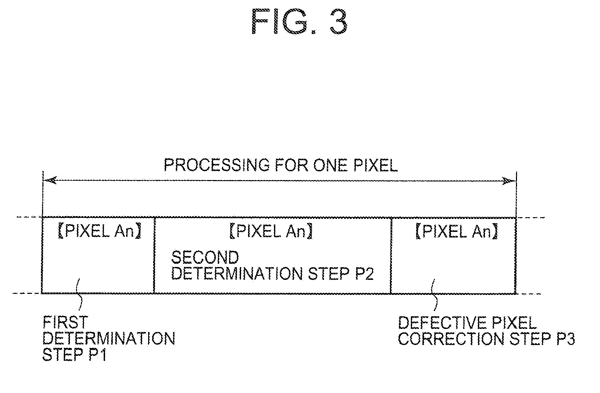

FIG. 3 is a view schematically showing a processing content for one pixel of the imaging device 3 described above. As shown in FIG. 3, the processing for one pixel An includes the first determination step P1, the second determination step P2, and/or the defective pixel correction step P3.

Additionally, since the first determination step P1 is the comparison between the pixel data Dn of each pixel An and the first and second threshold values and Th2 as described above, the determination processing can be performed speedily as compared with the second determination step P2. On the other hand, since the second determination step P2 is the comparison between the pixel data Dm of the defective pixel candidate Am and the pixel data Dmn of the pixels Amn around the defective pixel candidate Am as described above, the determination processing can be performed accurately as compared with the first determination step P1. In this manner, the defective pixel candidates Am are first narrowed down speedily by the first determination step P1 of high speed, and then the final defective pixel Ak is accurately determined from the narrowed down defective pixel candidates Am by the second determination step P2.

In contrast, a conventional defective pixel processing device may take a lot of time to perform the processing since a comparison needs to be performed between pixel data outputted from all pixels of an imaging device and pixel data of pixels therearound, for example. Instead, if the processing is performed only by simply comparing the pixel data of each pixel of the imaging device with a threshold value, high-speed processing is possible. In this case, however, another problem arises that a normal pixel may be erroneously detected as a defective pixel when the threshold value is set strict, whereas, a defective pixel may fail to be detected when the threshold value is set loose. Thus, the detection accuracy may decrease.

To deal with this problem, the defective pixel processing device 5 according to this embodiment includes: the first determination unit 5a that compares the pixel data Dn of each pixel An outputted from the imaging device 3 with the first and second threshold values Th1 and Th2 so as to determine whether or not each pixel An is the defective pixel candidate Am; and the second determination unit 5b that compares the pixel data Dm of the defective pixel candidate Am determined by the first determination unit 5a with the pixel data Dmn of the pixels Amn around the defective pixel candidate Am so as to determine whether or not the defective pixel candidate Am is the defective pixel Ak.

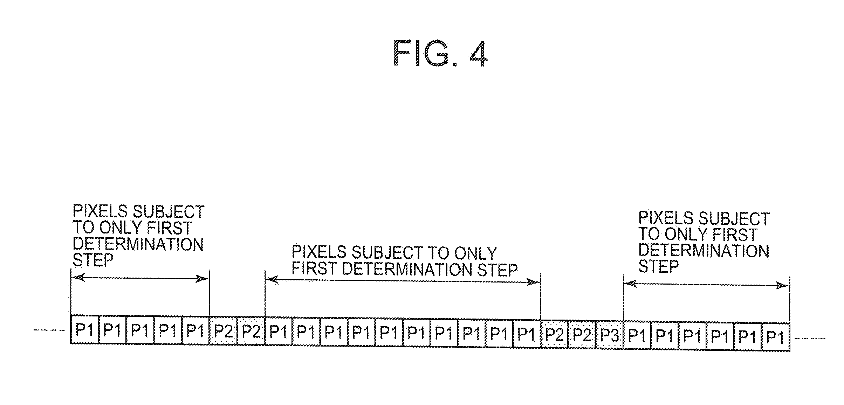

Accordingly, the first determination unit 5a, which simply compares the pixel data Dn of each pixel An with the first and second threshold values Th1 and Th2 and thus is capable of performing the determination processing speedily, narrows down the defective pixel candidates Am from all of the pixels An. By this first determination step P1, the pixels of a large part of all of the pixels An are excluded, as normal pixels, from objects of both the subsequent second determination step P2 and defective pixel correction step P3 that require processing time, as shown in FIG. 4, for example. Thus, the overall processing time can be shortened considerably, and the processing speed can be increased. Further, the second determination unit 5b, which performs the comparison between the pixel data Dm of the defective pixel candidate Am and the pixel data Dmn of the pixels Amn around the defective pixel candidate Am and thus is capable of performing the determination processing accurately, determines the final defective pixel Ak with high accuracy from the narrowed down defective pixel candidates Am.

In this manner, the first determination unit 5a, which is capable of performing the determination processing speedily, effectively narrows down the defective pixel candidates Am from all of the pixels An, and moreover, the second determination unit 5b, which is capable of performing the determination processing accurately, determines the final defective pixel Ak accurately from the narrowed down defective pixel candidates Am. Thus, the determination processing of the defective pixel Ak can be performed accurately while the determination processing of the defective pixel candidates Am can be performed speedily. In other words, the defective pixel Ak can be determined speedily and accurately.

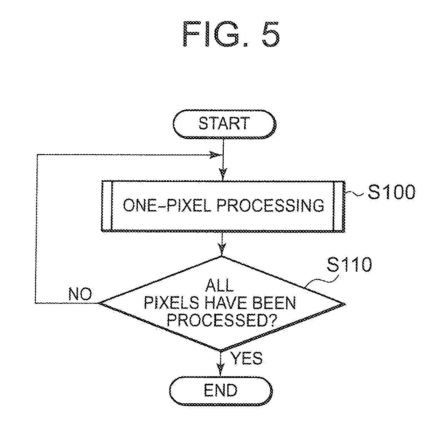

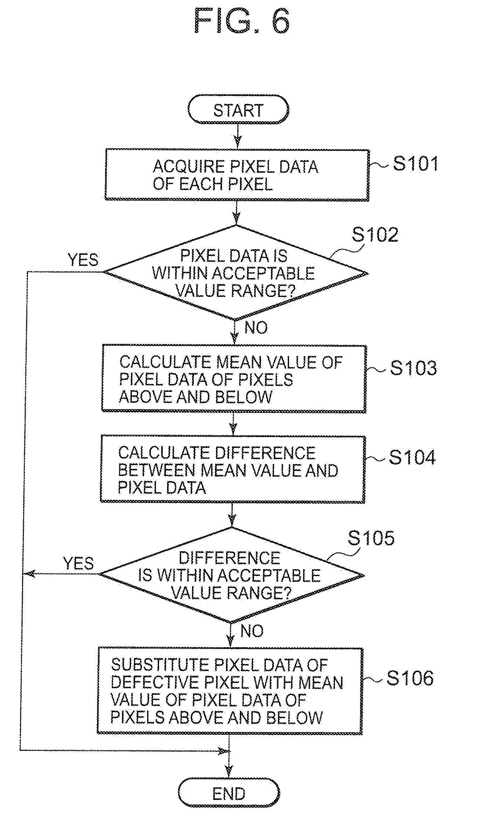

Next, a processing flow of the defective pixel processing device 5 according to this embodiment described above will be described in detail. FIGS. 5 and 6 are flowcharts each showing one example of the processing flow of the defective pixel processing device 5 according to one embodiment of the present invention.

As shown in FIG. 5, the defective pixel processing device 5 performs one-pixel processing on the pixel data Dn outputted from each pixel An of the imaging device 3 (step S100). Here the one-pixel processing includes the first determination step P1, the second determination step P2, and/or the defective pixel correction step P3. Then, upon judging that the one-pixel processing is finished for the pixel data Dn of all of the pixels An (YES in step S110), the defective pixel processing device 5 ends this defective pixel processing.

Next, the one-pixel processing of the defective pixel processing device 5 described above will be described in detail. As shown in FIG. 6, the imaging device 3 outputs the pixel data Dn of each pixel An to the first determination unit 5a via the A/D conversion unit 4 (step S101).

In the first determination step P1, the first determination unit 5a determines whether or not the pixel data Dn of each pixel An of the imaging device 3 outputted from the A/D conversion unit 4 is within an acceptable value range (Th2 < Dn < Th1) that is less than the first threshold value Th1 and greater than the second threshold value Th2 (step S102).

Upon determining that the pixel data Dn of each pixel An of the imaging device 3 is not within the acceptable value range (Dn ≤ Th2 or Dn ≤ Th1) (NO in step S102), the first determination unit 5a determines that the pixel An is the defective pixel candidate Am, and proceeds to the next second determination step P2. Accordingly, the defective pixel candidates Am can be narrowed down speedily from all of the pixels An.

On the other hand, upon determining that the pixel data Dn of each pixel An of the imaging device 3 is within the acceptable value range (YES in step 102), the first determination unit 5a ends the one-pixel processing. Accordingly, a normal pixel within the acceptable value range is excluded from objects of the subsequent second determination step P2 and defective pixel correction step P3 that require processing time. Thus, the overall processing time can be reduced considerably, and the processing speed can be increased.

In the second determination step P2, the second determination unit 5b extracts the pair of pixels Am1 and Am2 that are located above and below the defective pixel candidate Am and that have approximately the same color as the defective pixel candidate Am. Then, the second determination unit 5b calculates the mean value ((Dm1 + Dm2) /2) of the pixel data Dm1 and Dm2 of the extracted pixels Am1 and Am2 (step S103). Also, the second determination unit 5b calculates the difference δ (δ = (Dm1 + Dm2)/2 - Dm) between the calculated mean value and the pixel data Dm of the defective pixel candidate Am (step S104).

The second determination unit 5b determines whether or not the calculated difference δ is within an acceptable value range (Th4 < δ < Th3) that is less than the third threshold value Th3 and greater than the fourth threshold value Th4 (step S105).

Upon determining that the calculated difference δ is not within the acceptable value range (Dn ≤ Th4 or Dn ≥ Th3) (NO in step S105), the second determination unit 5b determines that the defective pixel candidate Am is the defective pixel Ak, and proceeds to the next defective pixel correction step P3. Accordingly, the final defective pixel. Ak is determined accurately from the defective pixel candidates Am narrowed down by the first determination unit 5a.

On the other hand, upon determining that the calculated difference δ is within the acceptable value range (YES in step S105), the second determination unit 5b ends the one-pixel processing.

In the defective pixel correction step P3, the defective pixel correction unit 5c substitutes the pixel data Dk of the defective pixel Ak with the mean value ((Dk1 + Dk2)/2) of the pixel data Dk1 and Dk2 of the pair of pixels Ak1 and Ak2 that are located above and below the defective pixel Ak outputted from the second determination unit 5b and that have approximately the same color as the defective pixel Ak (step S106). Then, the defective pixel correction unit 5c ends the one-pixel processing.

As described above, the defective pixel processing device 5 according to this embodiment includes the first determination unit 5a that compares the pixel data Dn of each pixel An outputted from the imaging device 3 with the first and second threshold values Th1 and Th2 so as to determine whether or not each pixel An is the defective pixel candidate Am and the second determination unit 5b that compares the pixel data Dm of the defective pixel candidate Am determined by the first determination unit 5a with the pixel data Dmn of the pixels Amn around the defective pixel candidate Am so as to determine whether or not the defective pixel candidate Am is the defective pixel Ak. Accordingly, the defective pixel Ak can be determined speedily and accurately.

The defective pixel processing device 5 according to this embodiment can not only correct a white defect and a black defect of the imaging device 3 at the time of factory shipment of the camera apparatus 1 but also correct in real time a white defect and a black defect of the imaging device 3 caused during imaging or after imaging by the camera apparatus 1. Thus, the defective pixel processing device 5 is highly user-friendly. Further, since the defective pixel Ak can be determined speedily and accurately as described above with a simple configuration, the use of the device leads to a cost reduction.

Although the inventions has been described above in connection with several preferred embodiments thereof, it will be appreciated by those skilled in the art that those embodiments are provided solely for illustrating the invention, and should not be relied upon to construe the appended claims in a limiting sense.

## Claims

1. A defective pixel processing device comprising:
first determination means that determines whether or not each of pixels outputted from an imaging device is a defective pixel candidate by comparing pixel data of said each of pixels with a threshold value; and
second determination means that determines whether or not said defective pixel candidate determined by said first determination means is a defective pixel by comparing pixel data of said defective pixel candidate with pixel data of some pixels around said defective pixel candidate.

2. The defective pixel processing device according to claim 1, wherein said first determination means determines that said defective pixel candidate may be a white defect when said pixel data takes a first threshold value or greater, and determines that said defective pixel candidate may be a black defect when said pixel data takes a second threshold value or less.

3. The defective pixel processing device according to claim 2, wherein said second determination means determines that said defective pixel is a white defect when a difference between a mean value of pixel data of said some pixels around said defective pixel candidate and pixel data of said defective pixel candidate has a third threshold value or greater, and determines that said defective pixel is a black defect when said difference between said mean value of pixel data of said some pixels around said defective pixel candidate and pixel data of said defective pixel candidate has a fourth threshold value or less.

4. The defective pixel processing device according to claim 3, wherein said second determination means extracts two pixels that are located above and below said defective pixel candidate and that have a color approximately identical to said defective pixel candidate, and calculates a mean value of pixel data of said extracted pixels.

5. The defective pixel processing device according to any of claims 1 to 4, further comprising defective pixel correction means that corrects pixel data of said defective pixel determined by said second determination means.

6. The defective pixel processing device according to claim 5, wherein said defective pixel correction means substitutes pixel data of said defective pixel with a mean value of pixel data of said some pixels around said defective pixel.

7. A defective pixel processing method comprising:
a first determination step of determining whether or not each of pixels outputted from an imaging device is a defective pixel candidate by comparing pixel data of said each pixels with a threshold value; and
a second determination step of determining whether or not said defective pixel candidate determined in said first determination step is a defective pixel by comparing pixel data of said defective pixel candidate with pixel data of some pixels around said defective pixel candidate.
